# EUROPÄISCHE PATENTSCHRIFT

(11) **EP 3 396 480 B1**
(45) Veröffentlichungstag und Bekanntmachung des Hinweises auf die Patenterteilung: **03.01.2024**
(21) Anmeldenummer: 17167844.4
(22) Anmeldetag: 24.04.2017
(51) Int. Cl.: G06F 8/34, G05B 19/05

(54) **VERFAHREN ZUM PROGRAMMIEREN EINER SICHERHEITSSTEUERUNG**
METHOD FOR PROGRAMMING A SAFETY DEVICE
PROCÉDÉ DE PROGRAMMATION D'UN DISPOSITIF DE SÉCURITÉ

(43) Veröffentlichungstag der Anmeldung: 31.10.2018
(73) Patentinhaber: Wieland Electric GmbH, 96052 Bamberg (DE)
(72) Erfinder: LUDVIK, Marco, 91325 Adelsdorf (DE)
(74) Vertreter: 2K Patentanwälte Blasberg Kewitz & Reichel

(56) Entgegenhaltungen:
- EP-B1- 2 012 201
- EP-B1- 2 098 926
- WO-A2-02/067065

## Beschreibung

Die Erfindung betrifft ein Verfahren zum Programmieren einer modularen Sicherheitssteuerung, ausgelegt zum gemäß einer Sicherheitsvorschrift sicheren Ein- und Ausschalten eines elektrischen Verbrauchers, wobei durch einen Prozessor eine Programmieroberfläche mit einer Logikprogrammierung auf einem Bildschirm dargestellt wird, in einem ersten Teilbereich der Programmieroberfläche eine Mehrzahl von Funktionsbausteinsymbolen dargestellt wird, auf das Auswählen eines Funktionsbausteinsymbols durch einen Benutzer innerhalb der Logikprogrammierung eine Instanz des ausgewählten Funktionsbausteinsymbols in einem zweiten Teilbereich der Programmieroberfläche dargestellt wird, wobei der zweite Teilbereich derart ausgebildet ist, dass bereits ausgewählte Instanzen von Funktionsbausteinsymbolen durch den Benutzer anhand eines Logikschaltbildes logisch verknüpft werden, und durch den Prozessor auf Basis des erstellten Logikschaltbildes und einer Modulkonfiguration und Klemmenbelegung entweder Konfigurationsdaten erstellt werden, die dazu ausgebildet sind, in die modulare Sicherheitssteuerung geladen zu werden und von dieser während der Ausführung einer dort hinterlegten Firmware interpretiert und verwendet zu werden, oder eine angepasste Firmware erstellt wird, die dazu ausgebildet ist, in die modulare Sicherheitssteuerung übertragen und dort ausgeführt zu werden.

Sicherheitssteuerungen werden vor allem im industriellen Bereich verwendet, um elektrische Verbraucher sicher ein- und auszuschalten, die Gefahrenpotential für Mensch und Material bergen. Derartige elektrische Verbraucher sind z.B. Pressen, Fräswerkzeuge etc. Hierzu wird die Stromversorgung für den elektrischen Verbraucher über Schaltausgänge der Sicherheitssteuerung gesteuert, die zur Erfüllung der einschlägigen Sicherheitsvorschriften, z.B. der Norm EN ISO 13849, ausgelegt sind. Dazu sind die internen Schaltkreise typischerweise redundant ausgestaltet, z.B. solche zum Ein- und Ausschalten des elektrischen Verbrauchers über zwei in Reihe geschaltete Relais, die von getrennten Stromkreisen gesteuert werden.

Sicherheitssteuerungen weisen üblicherweise eine Anzahl von Klemmen zum Anschluss der Arbeitskontakte von Gebern und Aktoren auf. Geber sind z.B. Not-Aus-Schalter oder Positions- oder Stellungsüberwachungen wie z.B. eine Schutztür, eine Lichtschranke, eine Schaltmatte etc. Sie dienen zur Ermittlung eines sicherheitsrelevanten Zustandes. Aktoren sind z.B. Relais, Schütze etc., mit denen - wie oben erläutert - der elektrische Verbraucher geschaltet wird. Die Geber haben dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn der Geber nicht mehr in der Position "sicher" ist. Darüber hinaus kann es aber auch weitere Geber geben, wie z.B. Nachlaufüberwachungen, die Zusatzinformationen zur Bestimmung einer nicht sicheren Situation oder sonstige Diagnoseinformationen liefern.

Sicherheitssteuerungen sind häufig auch modular aufgebaut, so dass mehrere, unterschiedlich geartete Gebertypen angeschlossen werden können. Dabei wird in der Regel ein Kopfmodul, in dem die (redundanten) Hauptprozessoren enthalten sind und das während der Laufzeit den Hauptteil der Auswertungsaufgaben leistet, um zusätzliche Erweiterungsmodule erweitert. Diese können besondere Aufgaben übernehmen, wie z.B. Schnittstellen zur Verfügung stellen, oder aber weitere Klemmen für Geber und Aktoren bereitstellen. Die Erweiterungsmodule sind dabei mit dem Kopfmodul in der Regel über einen Rückwandbus verbunden.

Bei derartigen größeren Sicherheitssteuerungen, seien sie nun modular oder nicht-modular aufgebaut, ist eine Programmierung allein anhand von manuellen Einstellschaltern nicht mehr praktikabel. Daher wird hier häufig auf eine Programmierung auf einer Programmieroberfläche eines Bildschirms eines digitalen Computers zurückgegriffen, wie sie beispielsweise auch aus dem Bereich der Speicherprogrammierbaren Steuerungen (SPS) bekannt ist. Auf einer derartigen Programmieroberfläche werden dem Benutzer üblicherweise Funktionsbausteinsymbole dargestellt, die z.B. per Drag-and-Drop ausgewählt werden und anhand eines Logikschaltbildes miteinander verknüpft werden. Diese logische Verknüpfung wird dann innerhalb der Programmiersoftware dazu genutzt, das zur Laufzeit der Sicherheitssteuerung verwendete Programm zu konfigurieren oder zu erstellen. Die bisher und im folgenden beschriebenen Verfahrensschritte werden entsprechend durch den Computerprozessor veranlasst.

Ein derartiges Verfahren ist dem Fachmann z.B. aus der EP 1362269 B1 bekannt. Die Funktionsbausteinsymbole sind dort in drei Gruppen eingeteilt, nämlich erstens Symbole, denen jeweils ein Gebertyp zugeordnet ist, zweitens Symbole, denen jeweils ein Aktortyp zugeordnet ist, und drittens Logiksymbole, die im Rahmen der Logik Zwischengrößen verarbeiten.

Neben der Logikprogrammierung ist aber auch die Auswahl und Anordnung entsprechender Hardware notwendig. So muss im Rahmen der Programmierung notwendigerweise für jeden verwendeten Aktor oder Geber festgelegt bzw. vom Benutzer eingegeben werden, an welche Klemmen der Sicherheitssteuerung der jeweilige Aktor oder Geber angeschlossen ist. Darüber hinaus muss bei modularen Sicherheitssteuerungen erst noch festgelegt werden, welche Module verwendet werden und wie diese angeordnet sind. Hierbei ist es gerade im Bereich von Sicherheitssteuerungen immens wichtig, dass die Eingabe für den Benutzer transparent und möglichst fehlerunanfällig ist, da Verwechslungen oder Falschzuordnungen unter Umständen fatale Folgen haben können.

In der EP 2012201 B1 und der EP 2098926 B1 wird hierzu vorgeschlagen, die hardwareseitige Konfiguration, d.h. Zuordnung der Geber und Aktoren zu Klemmen von der Logikprogrammierung zu trennen und in einer separaten Oberfläche vorzunehmen, in der ein physikalisches Abbild der Sicherheitssteuerung mit ihren Klemmen dargestellt ist. In der EP 2098926 B1 wird dabei auch eine teilautomatisierte Zuordnung offenbart, in der die benötigten Hardwareelemente zunächst ausgewählt und in einem Zwischenbereich abgelegt werden. Nach vollständiger Auswahl aller Hardwarelemente wird dann eine automatische Zuordnung dieser Hardwareelemente zu Klemmen durchgeführt. Erst danach erfolgt die Logikprogrammierung, wobei nur die zuvor ausgewählten Hardwareelemente innerhalb des Logikschaltbildes angesprochen werden können. Problematisch ist bei einer derartigen Trennung von hardwareseitiger Ansicht und Logikprogrammierung jedoch deren fehlende unmittelbare Verknüpfung. Beide Ansichten sind nämlich auf unterschiedlichen Bildschirmseiten dargestellt, was eine zusätzliche Fehlerquelle darstellen kann.

Die WO 02/067065 A2 offenbart eine Programmieroberfläche zur Verknüpfung ausgewählter Funktionsbausteinsymbole anhand eines Logikschaltbildes.

Es ist daher Aufgabe der Erfindung, ein Verfahren zur Programmierung einer modularen Sicherheitssteuerung der eingangs genannten Art anzugeben, welches die hardwareseitige Konfiguration auf möglichst fehlervermeidende und damit sichere Weise ermöglicht.

Diese Aufgabe wird erfindungsgemäß dadurch gelöst, dass jedem der Funktionsbausteinsymbole ein Datensatz zugeordnet ist, der einen Hardwareressourcenbedarf spezifiziert, wobei die Hardwareressourcen Funktionalitäten der modularen Sicherheitssteuerung und/oder eine Klemmenanzahl umfassen und beim Auswählen des Funktionsbausteinsymbols innerhalb der Logikprogrammierung anhand des Hardwareressourcenbedarfs, der in dem diesem Funktionsbaustein zugeordneten Datensatz spezifiziert ist, geprüft wird, ob eine aktuelle Modulkonfiguration der modularen Sicherheitssteuerung diesen Hardwareressourcenbedarf zusätzlich zu einem aktuellen Hardwareressourcenbedarf bereitstellen kann, und falls die aktuelle Modulkonfiguration diesen Hardwareressourcenbedarf nicht bereitstellen kann, die Modulkonfiguration geändert wird, wobei beim Ändern der Modulkonfiguration anhand der in den jeweiligen den Funktionsbausteinsymbolen zugeordneten Datensätzen spezifizierten Hardwareressourcenbedarfe aller bereits ausgewählten Instanzen von Funktionsbausteinsymbolen im zweiten Teilbereich ein Gesamthardwareressourcenbedarf ermittelt wird, wobei die Modulkonfiguration derart geändert wird, dass die geänderte Modulkonfiguration den Gesamtressourcenbedarf bereitstellen kann, indem werden aus allen möglichen Kombinationen von Modulen diejenigen Kombinationen ermittelt werden, die den Gesamthardwareressourcenbedarf bereitstellen können.

Die Erfindung geht dabei von der Überlegung aus, dass eine besonders sichere und fehlervermeidende Programmierung von Klemmenzuordnung und Logikverknüpfung insbesondere dann möglich wäre, wenn die Festlegung der Hardwarekonfiguration nicht durch den Programmierer, sondern vielmehr automatisiert erfolgt. Daher sollte in Abkehr von jüngeren Entwicklungen keine separate Oberfläche zur Vorabzusammenstellung der Hardwarekonfiguration mehr vorgesehen werden. Stattdessen sollte die Hardwarekonfiguration automatisiert erfolgen, und insbesondere auch in Echtzeit während der Erstellung der Logikprogrammierung. Dazu wird jedem der in der Programmiersoftware auswählbaren Funktionsbausteinsymbole ein Datensatz zugeordnet, der einen Hardwareressourcenbedarf dieses Funktionsbausteinsymbols spezifiziert. Immer wenn der Benutzer dann ein neues Funktionsbausteinsymbol auswählt, also bei jedem Auswählen eines solchen Symbols, wird geprüft, ob die aktuell hinterlegte Modulkonfiguration den Hardwareressourcenbedarf noch zusätzlich zum aktuellen Hardwareressourcenbedarf bereitstellen kann. Dies ergibt sich zum einen aus den von der aktuellen Modulkonfiguration bereitgestellten Hardwareressourcen, die ebenfalls in der Software je Modul hinterlegt sind, und zum anderen aus den bereits durch vorher ausgewählte Funktionsbausteinsymbole belegten Hardwareressourcen. Letztere können - ebenso wie der Hardwareressourcenbedarf des aktuell ausgewählten Funktionsbausteinsymbols - anhand der hinterlegten Datensätze bestimmt werden. Wenn die aktuelle Modulkonfiguration zusätzlich zu den bereits belegten Hardwareressourcen noch für das aktuell ausgewählte Funktionsbausteinsymbol ausreichend freie Hardwareressourcen bereitstellen kann, bleibt die akuelle Modulkonfiguration erhalten. Nur wenn dies nicht der Fall ist, wird die Modulkonfiguration geändert. Dadurch wird während der Logikprogrammierung die hardwareseitige Konfiguration vollautomatisch und ohne notwendigen Einfluss des Benutzers erstellt und auch kontinuierlich in Echtzeit nachgeführt.

Die Funktionsbausteinsymbole umfassen dabei auch Logikfunktionsbausteine, d.h. solche Funktionsbausteinsymbole, die sich nicht direkt auf bestimmte Geber oder Aktoren und deren Ein- bzw. Ausgangssignale beziehen, sondern die innerhalb der Logik Eingangssignale verarbeiten oder Ausgangssignale erstellen, oder auch nur Zwischengrößen im Logikablauf erstellen. Auch solche reinen Logikfunktionen können nämlich ggf. Anforderungen an die Hardware stellen, die durch die oben beschriebenen Maßnahmen dann in Echtzeit angepasst wird.

Die in den Datensätzen zu jederm Funktionsbausteinsymbol hinterlegten Hardwareressourcen umfassen Funktionalitäten der modularen Sicherheitssteuerung. Funktionalitäten in Bezug auf Hardwareressourcen bedeutet, dass die Hardware bestimmte Eigenschaften aufweisen muss, um diese Funktionalitäten zu erfüllen. So könnte beispielsweise ein Logikfunktionsbaustein verwendet werden, der als Eingangssignal ein Signal eines Inkrementalgebers verlangt. In diesem Fall muss ein Kopfmodul verwendet werden, welches solche Signale verarbeiten kann und hierfür auch entsprechende Eingänge bereitstellt. Die Funktionalität "Inkrementalgeber" ist also eine Hardwareressource, die der betreffende Logikfunktionsbaustein verlangt.

Die Hardwareressourcen umfassen weiterhin eine Klemmenanzahl. Die verwendete Hardware muss nämlich, insbesondere wenn innerhalb der Logikprogrammierung solche Funktionsbausteinsymbole ausgewählt werden, die direkt bestimmten Gebern oder Aktoren bzw. deren Signalen zugeordnet sind, stets ausreichende Eingangs- bzw. Ausgangsklemmen bereitstellen. Somit spezifizieren vorteilhafterweise für jedes Funktionsbausteinsymbol die Hardwareressourcen, wieviele Klemmen für das jeweilige Symbol benötigt werden, vorzugsweise außerdem, wieviele Klemmen welcher Art (sofern die Hardware nicht erlaubt, Klemmen beliebig zu verwenden).

Die Modulkonfiguration umfasst vorteilhafterweise zum einen die Art und zum anderen die Anzahl der Module der modularen Sicherheitssteueurung. So sind zum einen Kopfmodule mit unterschiedlichen Funktionalitäten als Arten denkbar, weiterhin sogenannte Gateway-Module als Schnittstellen z.B. zu Feldbussystemen, oder Eingangs- oder Ausgangserweiterungsmodule, die zusätzliche Eingangs- bzw. Ausgangsklemmen bereitstellen. Die Modulkonfiguration spezifiert vorteilhafterweise exakt, wieviele Module von welcher Modulart vorgesehen sind. Besonders vorteilhaft spezifiziert sie auch deren genaue Anordnung in einer Modulreihe, die über einen Bus miteinander verbunden ist.

Neben der Modulkonfiguration wird vorteilhafterweise weiterhin auch eine Belegung der Klemmen der Module der modularen Sicherheitssteuerung gespeichert. D.h., es wird nicht nur spezifiziert, welche Module verwendet werden, sondern auch, wie die einzelnen Klemmen dieser Module mit Gebern und Aktoren belegt werden. Auch diese Belegung wird vorteilhafterweise in Echtzeit angepasst. Dazu wird auf das Auswählen eines Funktionsbausteinsymbols, in dessen zugeordnetem Datensatz eine Klemmenanzahl als Hardwareressourcenbedarf hinterlegt ist, eine aktuelle Belegung der Klemmen der Module der modularen Sicherheitssteuerung geändert. Hierdurch ergibt sich für den Programmierer nicht nur vollautomatisch die zu verwendende Hardware, sondern auch deren konkrete Verdrahtung.

Wenn - aufgrund des Fehlens von Hardwareressourcen in der aktuellen Modulkonfiguration - die Modulkonfiguration geändert wird, wird in vorteilhafter Ausgestaltung des Verfahrens anhand der in den jeweiligen den Funktionsbausteinsymbolen zugeordneten Datensätzen spezifizierten Hardwareressourcenbedarfe aller bereits ausgewählten Instanzen von Funktionsbausteinsymbolen im zweiten Teilbereich der Programmieroberfläche ein Gesamthardwareressourcenbedarf ermittelt, und die Modulkonfiguration wird dann derart geändert, dass die geänderte Modulkonfiguration den Gesamtressourcenbedarf bereitstellen kann. Die neue Modulkonfiguration ist also so gewählt, dass sie den gesamten benötigten Ressourcenbedarf aller Funktionsbausteinsymbole bereitstellt.

Dabei werden in der Regel mehrere mögliche Modulkonfigurationen in Frage kommen. Vorzugsweise ist die geänderte Modulkonfiguration daher diejenige Modulkonfiguration, die die geringstmögliche Menge an Hardwareressourcen bereitstellt. Mit anderen Worten: Bei der Ermittlung der neuen, geänderten Modulkonfiguration findet eine automatische Optimierung statt, so dass nur die unbedingt nötigen Module ausgewählt und hinzugefügt werden und nicht unnötig viele, dann unbelegte Hardwareressourcen bereitgestellt werden. Es wird von allen möglichen Modulkonfigurationen also quasi ein Minimum über die benötigten Hardwareressourcen gebildet, und die diesem Minimum entsprechende Modulkonfiguration ausgewählt und verwendet. Hierdurch wird der Ressourcen- und Energieverbrauch der Sicherheitssteuerung im Betrieb minimiert.

Vorteilhafterweise sind weiterhin auf Basis von hardwareseitigen Beschränkungen Modulkonfigurationsbedingungen hinterlegt, wobei, falls die geänderte Modulkonfiguration die Modulkonfigurationsbedingungen nicht erfüllt, die Darstellung des Funktionsbausteinsymbols im zweiten Teilbereich der Programmieroberfläche annuliert wird. Auf diese Weise wird vermieden, dass der Benutzer in der Logikprogrammierung Logiken entwirft, die von der zur Verfügung stehenden Hardware nicht abgebildet werden. So könnten beispielsweise bestimmte Logikbausteinsymbole nur einmal verwendet werden dürfen, da die zur Verfügung stehende Hardware die entsprechende Funktionalität nur maximal einmal bereitstellen kann. Dies wird als entsprechende Modulkonfigurationsbedingung in der Software hinterlegt. Der vom Benutzer durchgeführte Auswählvorgang wird dann annuliert, d.h. die Auswahl wird sofort wieder rückgängig gemacht oder auf der Programmieroberfläche gar nicht erst erlaubt. Bei einer Auswahl per Drag-and-Drop könnte z.B. ein Verankern im Logikschaltplan unmöglich sein, ggf. mit einer Mitteilung an den Benutzer. Neben den aufgrund von hardwareseitigen Beschränkungen hinterlegten Bedingungen können vorteilhafterweise in analoger Weise auch vom Benutzer manuell hinterlegte Bedingungen eingestellt werden.

Da das Verfahren die verwendete Hardware in Echtzeit an die ausgewählten Funktionsbausteinsymbole anpasst, geschieht dies vorteilhafterweise umgekehrt analog auch beim Entfernen eines Funktionsbausteinsymbols. Hierzu wird vorteilhafterweise auf das Löschen eines Funktionsbausteinsymbols aus dem zweiten Teilbereich durch den Benutzer der Hardwareressourcenbedarf, der in dem diesem Funktionsbaustein zugeordneten Datensatz spezifiziert ist, in der aktuellen Modulkonfiguration freigegeben. Bei einer gleichzeitigen Festlegung der Klemmenbelegung (siehe oben) wird dabei analog vorteilhafterweise auch die Belegung der Klemmen wieder geändert.

Nach der beschriebenen Freigabe wird dabei vorteilhafterweise wiederum anhand der in den jeweiligen den Funktionsbausteinsymbolen zugeordneten Datensätzen spezifizierten Hardwareressourcenbedarfe aller bereits ausgewählten Instanzen von Funktionsbausteinsymbolen im zweiten Teilbereich ein Gesamthardwareressourcenbedarf ermittelt, und es wird weiter geprüft, ob eine andere Modulkonfiguration mit einer geringeren Menge an Hardwareressourcen den Gesamthardwareressourcenbedarf bereitstellen kann, Falls auf Basis der Prüfung eine derartige andere Modulkonfiguration ermittelt werden kann, wird die aktuelle Modulkonfiguration in die andere Modulkonfiguration geändert. Mit anderen Worten: Die oben beschriebene Optimierung der Modulkonfiguration findet vorteilhafterweise auch beim Entfernen eines Funktionsbausteinsymbols statt, so dass ggf. nicht mehr benötigte Module unmittelbar entfernt werden.

Ein Computerprogrammprodukt, welches direkt in den internen Speicher eines digitalen Computers mit einem Bildschirm geladen werden kann, umfasst vorteilhafterweise Softwarecodeabschnitte, die, wenn sie auf dem Computer ausgeführt werden, den Computer zum Ausführen eines der oben beschriebenen Verfahren ertüchtigen, wobei die Programmieroberfläche auf dem Bildschirm des Computers angezeigt wird. Ein derartiges Computerprogrammprodukt ist eine Programmiersoftware, die mittels der Hardware des Computers wie Bildschirm und Schnittstellen wie z.B. Tastatur und Maus oder eines Touchscreens die Erstellung einer Programmierung mittels der beschriebenen graphischen Repräsentation von Klemmen der Sicherheitssteuerung ermöglicht und entsprechende Werkzeuge zur Erstellung logischer Verknüpfungen zur Verfügung stellt.

Vorteilhafterweise ist ein derartiges Computerprogrammprodukt in den internen Speicher eines digitalen Computers geladen. Ein derartiger Computer kann ein üblicher Personal Computer sein, bei einer entsprechenden Schnittstelle ist es aber auch denkbar, eine derartige Software auch für Tablets oder sogar Smartphones anzupassen. Auch sonstige proprietäre Systeme können mit einer entsprechenden Software ausgestattet sein. Alle diese Systeme sind unter dem Begriff digitaler Computer zusammengefasst.

Ein Computerprogrammprodukt, welches direkt in den internen Speicher einer Sicherheitssteuerung geladen werden kann, umfasst vorteilhafterweise Softwarecodeabschnitte, die mittels des beschriebenen Verfahrens erstellt wurden. Hierbei wird die mittels der Software für den digitalen Computer erstellte Programmierung in den Speicher der Sicherheitssteuerung geladen, so dass diese unabhängig und autark lauffähig ist.

Eine Sicherheitssteuerung, ausgelegt zum gemäß einer Sicherheitsvorschrift sicheren Ein- und Ausschalten eines elektrischen Verbrauchers, ist vorteilhafterweise mit dem beschriebenen Verfahren programmiert.

Die mit der Erfindung erzielten Vorteile bestehen insbesondere darin, dass durch eine Echtzeit-Hardwarekonfiguration während der Logikverknüpfung vollautomatisch die benötigten Module hinsichtlich Art und Anzahl konfiguriert und ihre Klemmen belegt werden. Dadurch kann der Programmierer direkt die Logikprogrammierung vornehmen, ohne sich mit der hardwareseitigen Umsetzung zu beschäftigen. Eventuelle hardwareseitige Beschränkungen werden ihm in der Logikprogrammierung angezeigt. Die ggf. fehleranfällige manuelle Auswahl von Modulen und Belegung der Klemmen entfällt beim vorgeschlagenen Echtzeitverfahren vollständig und wird vollautomatisch durch die Software durchgeführt. Dabei hat der Programmierer stets sofort eine Information darüber, wie sich eine durchgeführte Logikänderung auf die aktuelle Modulkonfiguration und Klemmenbelegung auswirkt. Letztere kann ihm z.B. in einem separaten Teilbereich oder einem separaten Reiter der Programmieroberfläche angezeigt werden. Dadurch werden im Rahmen der Programmierung der modularen Sicherheitssteuerung Fehler vermieden und so die Sicherheit des programmierten Systems erhöht.

Ausführungsbeispiele der Erfindung werden anhand von Zeichnungen näher erläutert. Darin zeigen:
- FIG 1: eine schematische Darstellung einer modularen Sicherheitssteuerung,
- FIG 2: eine schematische Darstellung der modularen Sicherheitssteuerung in einer Betriebsart mit einem redundanten Schalter,
- FIG 3: eine schematische Darstellung der Sicherheitssteuerung mit einem zur Programmierung ausgerüsteten digitalen Computer,
- FIG 4: eine schematische Darstellung einer Programmieroberfläche

Gleiche Teile sind in allen Zeichnungen mit denselben Bezugszeichen versehen.

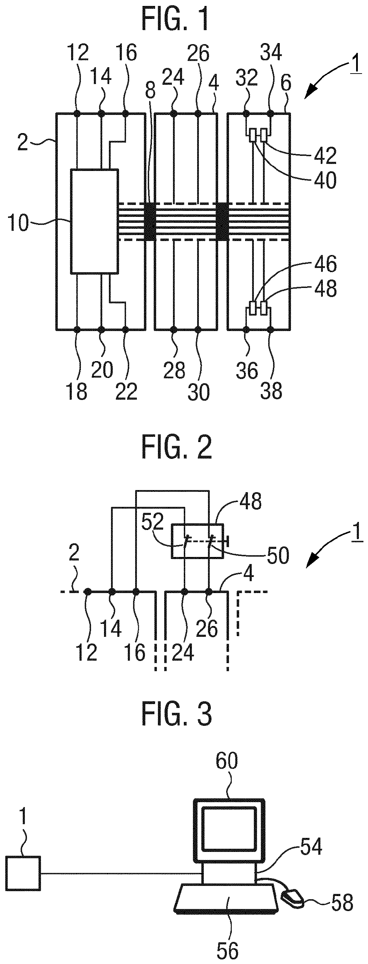

Die FIG 1 zeigt schematisch eine modulare Sicherheitssteuerung 1, umfassend ein Kopfmodul 2, ein Eingangserweiterungsmodul 4 und ein Ausgangserweiterungsmodul 6, die über einen Rückwandbus 8 datenseitig miteinander verbunden sind. Im Kopfmodul 2 ist eine zentrale Steuereinheit 10 angeordnet, die die Eingangssignale verarbeitet und daraus Ausgangssignale erzeugt. Die Sicherheitssteuerung 1 ist gemäß der Norm EN ISO 13849 ausgestaltet, so dass die Steuereinheit 10 zwei nicht näher gezeigte, redundant arbeitende Mikrocontroller umfasst.

Die Sicherheitssteuerung 1 weist eine Vielzahl von Klemmen 12 - 38 auf, von denen sechs Klemmen 12 - 22 am Kopfmodul 2, vier Klemmen 24 - 30 am Eingangserweiterungsmodul 4 und vier Klemmen 32 - 38 am Ausgangserweiterungsmodul 6 angeordnet sind. Die Steuereinheit 10 kann über den Rückwandbus 8 und ggf. weitere Prozessoreinheiten in den Erweiterungsmodulen 4, 6 jede der Klemmen 12 - 38 ansteuern bzw. abrufen.

Die Klemmen 32 - 38 des Ausgangserweiterungsmoduls 6 können paarweise in die Stromzufuhr zu einem nicht näher gezeigten Aktor geschaltet werden, der einen elektrischen Verbraucher schaltet, der Gefahrenpotential aufweist und daher sicher ausgeschaltet werden soll. Dazu sind in die Verbindung zwischen den Klemmen 32, 34 bzw. 36, 38 jeweils zwei Relais 40, 42 bzw. 44, 46 in Reihe geschaltet. Um den Stromfluss zu erhalten, müssen beide Relais 40, 42 bzw. 44, 46 im geschlossenen Zustand sein, sie sind also redundant. Die Relais 40, 42 bzw. 44, 46 werden von den redundanten Mikrocontrollern der Steuereinheit 10 unabhängig gesteuert.

Um die Funktion des elektrischen Verbrauchers im Gefahrenfall zu unterbrechen oder zumindest zu beeinflussen, sind verschiedene, beispielhaft in der folgenden FIG 2, jedoch nicht in der FIG 1 gezeigte Geber an die Sicherheitssteuerung 1 anschließbar. Diese können z.B. Not-Aus-Schalter, Lichtschranken, Türpositionsschalter etc. sein. Zum Anschluss dieser Geber weist die Sicherheitssteuerung 1 neben den Klemmen 24 - 30 am Eingangserweiterungsmodul 4 auch Klemmen 12 - 22 auf, die die Geber mit Strom versorgen können. An einigen dieser Klemmen 12 - 22 liegt im Ausführungsbeispiel stets eine kleine positive Gleichspannung an, dies ist jedoch nicht zwingend, z.B. bei sog. Open-Collector oder Tri State-Ausgängen. Alternativ können an anderen dieser Klemmen 12 - 22 auch Prüfsignale mit zyklischen, pulsartigen Prüfpulsen zur Leitungs- und Kurzschlussprüfung vorgesehen sein, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Alle Klemmen 12 - 38 können hardwareseitig beliebig, z.B. als Schraub- oder Federklemmen ausgestaltet sein.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 verzichtet und es wird nur ein Ausschnitt der Sicherheitssteuerung gezeigt.

FIG 2 zeigt einen Not-Aus-Schalter 48, der zwei redundante Kanäle mit zwei mechanisch verbundenen Schaltern 50, 52 umfasst. Die Schalter 50, 52 sind äquivalent, d.h. beide im Gutzustand geschlossen und im Zustand der Anforderung der Sicherheitsfunktion geöffnet. Hier ist der Not-Aus-Schalter 48 derart mit dem Sicherheitssteuerung 1 verbunden, dass Klemme 16 über den einen der Schalter 50 mit Klemme 26 verbunden ist, Klemme 14 über den anderen der Schalter 52 mit Klemme 24. Auf den Klemmen 24, 26 ergibt sich bei Freigabe somit die Signalkombination Plus, Plus, im Zustand der Anforderung der Sicherheitsfunktion die Signalkombination Null, Null. Andere Signalkombinationen deuten auf einen Fehler hin. In beiden letztgenannten Fällen wird eine Unterbrechung der Stromzufuhr des jeweils durch die noch im Folgenden erläuterte Logikprogrammierung mit dem Not-Aus-Schalter 48 verknüpften Stromkreises im Ausgangserweiterungsmodul 6 veranlasst, beispielsweise zwischen den Klemmen 36 und 38.

Das Beispiel in den FIG 1 und 2 dient nur der Veranschaulichung der Funktionsweise der Sicherheitssteuerung 1 und ist daher stark vereinfacht. In der Realität wird das System weit komplexer sein, d.h. es werden wesentlich mehr Module und Module anderer Art (z.B. sogenannten Gateway-Module für Schnittstellen zu Feldbussen) vorhanden sein, und es werden eine Vielzahl weiterer Klemmen auf verschiedenen Modulen vorhanden sein, die eine Vielzahl von elektrischen Verbrauchern schalten können und an die eine Vielzahl von Gebern und Aktoren verschiedenster Art angeschlossen werden kann. Auch müssen die Klemmen nicht notwendig nur eine Funktion erfüllen sondern können ggf. auch variabel als Ein- oder Ausgangsklemmen verwendet werden.

Die Klemmenbelegung und damit letztlich die an den Klemmen zu erwartenden Signalkombinationen sowie die logische Verknüpfung zwischen den Geber- und Aktorsignalen müssen in der Steuereinheit 10 der Sicherheitssteuerung 1 hinterlegt sein, so dass diese bei entsprechender Signalisierung die Abschaltung der richtigen elektrischen Verbraucher veranlasst. Dies geschieht durch Übergabe entsprechender Parameter, d.h. einer entsprechenden Konfiguration an ein in der Steuereinheit 10 hinterlegtes Computerprogramm (die Firmware).

Die Erstellung dieser Konfiguration erfolgt an einem digitalen Computer 54, der in FIG 3 gezeigt ist. Der Computer 54 weist Eingabegeräte wie eine Tastatur 56 und eine Maus 58 auf sowie einen Bildschirm 60 als Ausgabegerät. Über eine serielle oder parallele Schnittstelle oder z.B. über Ethernet ist er mit der Sicherheitssteuerung 1 verbunden. Auf dem Computer 54 wird durch einen Benutzer auf einer graphischen Programmieroberfläche anhand der angedachten Geber- und Aktorkombination sowie der gewünschten logischen Verknüpfung die Konfiguration erstellt, geprüft und anschließend in die Steuereinheit 10 der Sicherheitssteuerung 1 übertragen. In einer alternativen, nicht gezeigten Ausführungsform kann der digitale Computer 54 auch als Tablet mit Touchscreen ausgestaltet sein. Insofern im Folgenden im Ausführungsbeispiel von Mausklick oder Mausbewegung gesprochen wird, wäre dies im Falle eines Tablets durch Antippen und entsprechendes Ziehen des Fingers durchzuführen.

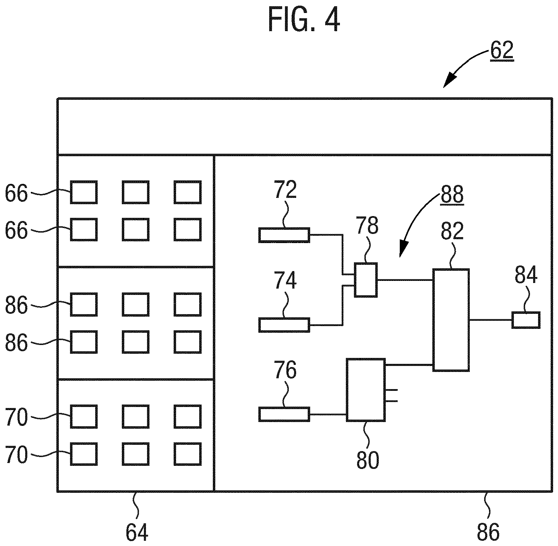

Eine solche, auf einem Bildschirm 60 dargestellte Programmieroberfläche 62 ist in der FIG 4 gezeigt. Die Programmieroberfläche 62 weist einen ersten Teilbereich 64 auf, in dem Funktionsbausteinsymbole 66, 68, 70 dargestellt sind. Die Funktionsbausteinsymbole 66, 68, 70 sind dabei in drei Gruppen gruppiert. Die erste Gruppe umfasst Funktionsbausteinsymbole 66, denen jeweils ein Geber zugeordnet ist, z.B. Not-Aus-Schalter einkanalig, Not-Aus-Schalter zweikanalig etc. Diese Funktionsbausteinsymbole 66 symbolisieren ein Eingangssignal eines solchen Gebers, wobei in der Logikprogrammierung die hardwareseitig realisierte Redundanz (siehe oben) bereits nicht mehr für den Benutzer ersichtlich ist, da die Fehlerüberwachung von der Firmware der Sicherheitssteuerung 1 auch ohne gesonderte Programmierung selbst geleistet wird. Der Benutzer soll im Rahmen der Programmierung nur festlegen, wie die Betätigung eines solchen Gebers wirkt. So würde beim in FIG 2 gezeigten zweikanaligen Not-Aus-Schalter, obwohl dieser real zwei redundante Kanäle umfasst, in der Logikprogrammierung auf der Programmieroberfläche 62 nur ein einzelnes Ausgangssignal angezeigt, dass dann in der Logik weiter verknüpft wird.

Entsprechend umfasst die zweite Gruppe von Funktionsbausteinsymbolen 68 solche Symbole, die Ausgangssignale an Aktoren symbolisieren. Das oben Gesagte gilt hier analog. Die dritte Gruppe umfasst schließlich Funktionsbausteinsymbole 70, die Logikbausteine sind. Diese können einfache logische Kombinationen wie "UND" oder "ODER" sein, komplexere Auswerter wie Flip-Flops, Taktgeneratoren oder aber applikationsspezifische Funktionsbausteinsymbole 70 für Abschaltverzögerungen, Pressen etc. In nicht gezeigten Ausführungsbeispielen können die Funktionsbausteinsymbole 66, 68, 70 auch nach weiteren inhaltlichen Kriterien untergruppiert sein.

Der Benutzer wählt im Rahmen der Logikprogrammierung nun ein Funktionsbausteinsymbol 66, 68, 70 aus. Die Auswahl erfolgt durch Bewegen des nicht näher dargestellten Mauszeigers auf das gewünschte Funktionsbausteinsymbol 66, 68, 70 und einfachen Mausklick auf das jeweils gewünschte Funktionsbausteinsymbol 66, 68, 70. Die Auswahl durch Mausklick führt dazu, dass eine Instanz 72 - 84 des Funktionsbausteinsymbols 66, 68, 70 erzeugt wird, die an den Mauszeiger angeheftet wird.

Die Instanz 72 - 84 wird erzeugt, da mehrere gleichartige Funktionsbausteinsymbole 66, 68, 70 benötigt werden können und daher ggf. mehrfach nacheinander das gleiche Funktionsbausteinsymbol 66, 68, 70 ausgewählt werden muss. Die Instanz 72 - 84 kann in ihrer Darstellung dabei identisch mit dem Funktionsbausteinsymbol 66, 68, 70 sein, muss dies aber nicht. Im Ausführungsbeispiel sind die Instanzen 72 - 84 deutlich breiter und flacher als das Funktionsbausteinsymbol 66, 68, 70, um ggf. Text auf ihr darzustellen. Enthält das Funktionsbausteinsymbol 66, 68, 70 ein kennzeichnendes Piktogramm, so kann dieses Piktogramm in Ausführungsformen auch auf der Instanz 72 - 84 ggf. vergrößert oder verkleinert, dargestellt werden.

Für die Festlegung der logischen Verknüpfung dient ein im zweiten Teilbereich 86 der Programmieroberfläche 62 dargestelltes, vom Programmierer mithilfe der Instanzen 72 - 84 erstelltes Logikschaltbild. Im Logikschaltbild erfolgt die Programmierung anhand graphischer Symbole, die logisch durch Linienzug verknüpft werden. Eingangssignale von Gebern, repräsentiert durch Instanzen 72, 74, 76 aus den Funktionsbausteinsymbolen 66 werden durch Logikbausteine in den Instanzen 78, 80 verarbeitet und in Ausgangssignale für Aktoren, repräsentiert durch Instanz 84, verarbeitet. Die Hinterlegung der Instanzen 72 - 84 erfolgt nach Auswahl der Funktionsbausteinsymbole 66, 68, 70 (siehe oben) durch einfaches Drag-and-Drop-Verfahren. Durch einfaches Verbinden mit Linien können die Signale wie gewünscht weitergeleitet werden. Durch geschickte Auswahl und Kombination von Funktionsbausteinsymbolen 66, 68, 70 und entsprechende Verbindung der Instanzen 72 - 84 wird somit ein Logikschaltbild 88 erzeugt, das die Schaltlogik definiert.

Für größtmögliche Fehlervermeidung bei der späteren Verdrahtung und Anordnung der Hardware wird in Echtzeit zum oben beschriebenen Logikprogrammiervorgang automatisiert auch eine Modulkonfiguration der Sicherheitssteuerung 1 und eine Klemmenzuordnung festgelegt. Hierzu ist in der Software, die die Programmieroberfläche 62 erzeugt, zu jedem Funktionsbausteinsymbol 66, 68, 70 ein Datensatz hinterlegt, der den Hardwareressourcenbedarf dieses Funktionsbausteinsymbols 66, 68, 70 spezifiziert. Dies umfasst zum einen die jeweils benötigte Anzahl von Eingangs- und Ausgangsklemmen 12 - 38, als auch bestimmte Funktionen der modularen Sicherheitssteuerung 1. So kann z.B. das bereits erwähnte spezielle Funktionbausteinsymbol 70 eine Hardwareressourcenbedarf dahingehend spezifizieren, dass auch eine Art eines Kopfmoduls 2 verwendet werden muss, welches die entsprechende Pressenfunktionalität bereitstellt. Ein solches Funktionsbausteinsymbol 70 könnte beispielhaft die Hardwareressourcenanforderung "zwei Eingangsklemmen; zwei Ausgangsklemmen; Pressenfunktionalität" im zugeordneten Datensatz hinterlegt haben.

Gleichzeitig sind in der Software für alle existierenden Modularten 2, 4, 6 die Hardwareressourcen hinterlegt, die sie bereitstellen, d.h. Anzahl und Art der Klemmen sowie spezifische Funktionalitäten. Parallel erstellt die Software während der Logikprogrammierung nun automatisiert eine Modulkonfiguration, d.h. eine Kombination aus Anzahl, Art und Anordnung von Modulen 2, 4, 6. Dies erfolgt so, dass bei jedem Drag-and-Drop-Vorgang eines Funktionsbausteinsymbols 66, 68, 70 überprüft wird, ob die in der Software aktuell hinterlegte Modulkonfiguration noch ausreichend freie Hardwareressourcen zur Verfügung stellen kann. Die Software kennt - wie beschrieben - die Hardwareressourcen jedes Moduls und kann anhand der im Logikschaltbild 88 hinterlegten Instanzen 72 - 84 und ihres jeweils zugeordneten Ressourcenbedarfs ermitteln, wieviele dieser Ressourcen bereits vergeben sind. (Beispiel: Am Anfang des Logikprogrammiervorgangs, wenn die erste Instanz 72 - 84 im zweiten Teilbereich 86 hinterlegt wird, wird die Modulkonfiguration aus keinem Modul 2, 4, 6 bestehen. Sie hat entsprechend keine freien Hardwareressourcen.)

Wenn die Prüfung ergibt, dass keine freien Hardwareressourcen zur Verfügung stehen, wird die Modulkonfiguration geändert. Dies erfolgt so, dass auf Basis aller aktuell verankerten Instanzen 72 - 84 und deren hinterlegtem Hardwareressourcenbedarf ein Gesamthardwareressourcenbedarf ermittelt wird. Sodann werden aus allen möglichen Kombinationen von Modulen 2, 4, 6 diejenigen Kombinationen ermittelt, die den Gesamthardwareressourcenbedarf bereitstellen können. Aus diesen ermittelten Kombinationen wird diejenige herausgesucht, die den geringsten Hardwareressourcenbedarf bereitstellt, und als neue, aktuelle Modulkonfiguration gespeichert. Die jeweils aktuelle Modulkonfiguration wird dem Benutzer in einem - nicht dargestellten - separaten Reiter auf dem Bildschirm 60 angezeigt, so dass er die Veränderung der Modulkonfiguration aufgrund seiner Einstellungen im Logikschaltbild 88 in Echtzeit verfolgen kann. Dies kann z.B. in Textform oder in graphischer Form erfolgen.

Die Prüfung erfolgt während des Drag-and-Drop-Vorgangs. Kann die Software keine mögliche Modulkonfiguration ermitteln, die den Gesamthardwareressourcenbedarf bereitstellen kann, so ist es dem Benutzer nicht möglich, das gerade ausgewählte Funktionsbausteinsymbol 66, 68, 70 als Instanz 72 - 84 im zweiten Teilbereich 86 zu hinterlegen. Die Ermittlung einer geeigneten Modulkonfiguration unterliegt zudem weiteren Randbedingungen, die in der Software hinterlegt sind. Dies sind zum einen hardwarebasierte Konfigurationsbedingungen, z.B. dass eine bestimmte Modulart nur in einer bestimmten Menge vorkommen darf, oder aber es handelt sich um durch einen Benutzer einstellbare Bedingungen, z.B. dass die Sicherheitssteuerung 1 an einen bestimmten Feldbustyp anschließbar sein soll. Diese Modulkonfigurationsbedingungen werden bei der Ermittlung einer geeigneten Modulkonfiguration stets berücksichtigt.

Über die Modulkonfiguration hinaus erstellt die Software auch vollautomatisch eine entsprechende Klemmenbelegung der Klemmen 12 - 38 der Module 2, 4, 6 in der aktuellen Modulkonfiguration. Dazu wird - immer wenn ein Funktionsbausteinsymbol 66, 68, 70 ausgewählt wird, welches eine Klemmenanzahl als Hardwareressourcenbedarf hinterlegt hat - eine Klemmenbelegung zugewiesen und gespeichert. Die freien Klemmen 12 - 38 der Sicherheitssteuerung 1 können hierbei z.B. einfach aufsteigend belegt werden oder aber es kann eine kompliziertere Zuordnungsfunktion verwendet werden.

Der gleiche Vorgang findet analog statt, wenn Instanzen 72 - 84 aus dem Logikschaltbild 88 entfernt werden. Auch dann wird geprüft, ob eine optimalere, d.h. geringere Hardwareressourcen bereitstellende Modulkonfiguration möglich ist. Wenn ja, wird diese Modulkonfiguration als aktuelle Modulkonfiguration hinterlegt. Die Klemmen werden dann ggf. neu zugewiesen. Werden Instanzen 72 - 84 entfernt, die eine Klemmenanzahl als Hardwareressourcen benötigen, werden die entsprechend zugeordneten Klemmen 12 - 38 in der aktuellen Klemmenbelegung freigegeben.

Nach Abschluss der Logikprogrammierung kann der Benutzer sowohl die Modulkonfiguration (Beispiel: Ein Kopfmodul mit Pressenfunktionalität, zwei Eingangserweiterungsmodule, ein Gateway-Modul) und die Klemmenbelegung (Beispiel: Not-Aus zweikanalig an Klemme A1, A2 etc.) in der Software einsehen. Dadurch hat er alle Informationen für Zusammenbau und Verdrahtung der Hardware sofort unmittelbar präsent. Die Software zeigt auch die Bestellnummern der entsprechenden Hardwareteile an und ermöglicht eine direkte Bestellung beim Hersteller. In einzelnen Ausführungsformen kann der Benutzer auch nachträglich noch manuelle Umbelegungen vornehmen, was jedoch wieder die Gefahr von Fehlern erhöhen kann.

Auf Basis des erstellten Logikschaltbilds 88 und der automatisiert erstellten Modulkonfiguration und Klemmenbelegung erstellt die Programmiersoftware, die auch die Darstellung der Programmieroberfläche 62 veranlasst, aus der graphischen Darstellung automatisch die Konfigurationsdaten, die die oben beschriebenen Informationen enthalten. Diese werden dann in die Sicherheitssteuerung 1 übertragen und von dieser während der Ausführung der dort hinterlegten Firmware interpretiert und verwendet. In anderen Ausführungen kann von der Programmiersoftware auch direkt eine entsprechend angepasste Firmware erstellt werden, die dann in die Sicherheitssteuerung 1 übertragen und dort ausgeführt wird.

### Bezugszeichenliste

- 1: Sicherheitssteuerung
- 2: Kopfmodul
- 4: Eingangserweiterungsmodul
- 6: Ausgangserweiterungsmodul
- 8: Rückwandbus
- 10: Steuereinheit
- 12 - 38: Klemme
- 40 - 46: Relais
- 48: Not-Aus-Schalter
- 50, 52: Schalter
- 54: Computer
- 56: Tastatur
- 58: Maus
- 60: Bildschirm
- 62: Programmieroberfläche
- 64: erster Teilbereich
- 66, 68, 70: Funktionsbausteinsymbol
- 72 - 84: Instanz
- 86: zweiter Teilbereich
- 88: Logikschaltbild

## Patentansprüche

1. Verfahren zum Programmieren einer modularen Sicherheitssteuerung (1), ausgelegt zum gemäß einer Sicherheitsvorschrift sicheren Ein- und Ausschalten eines elektrischen Verbrauchers, wobei durch einen Prozessor eine Programmieroberfläche (62) mit einer Logikprogrammierung auf einem Bildschirm (60) dargestellt wird,
in einem ersten Teilbereich (64) der Programmieroberfläche (62) eine Mehrzahl von Funktionsbausteinsymbolen (66, 68, 70) dargestellt wird, die Eingangssignale von Gebern oder Ausgangssignale an Aktoren symbolisieren, oder Logikfunktionsbausteine umfassen;
auf das Auswählen eines der Funktionsbausteinsymbole (66, 68, 70) durch einen Benutzer innerhalb der Logikprogrammierung eine Instanz (72 - 84) des ausgewählten Funktionsbausteinsymbols (66, 68, 70) in einem zweiten Teilbereich (86) der Programmieroberfläche (62) dargestellt wird,
wobei der zweite Teilbereich (86) derart ausgebildet ist, dass bereits ausgewählte Instanzen (72 - 84) von Funktionsbausteinsymbolen (66, 68, 70) durch den Benutzer anhand eines Logikschaltbildes (86) logisch verknüpft werden,
und durch den Prozessor auf Basis des erstellten Logikschaltbildes (68) und einer Modulkonfiguration und Klemmenbelegung entweder Konfigurationsdaten erstellt werden, die dazu ausgebildet sind, in die modulare Sicherheitssteuerung (1) geladen zu werden und von dieser während der Ausführung einer dort hinterlegten Firmware interpretiert und verwendet zu werden, oder eine angepasste Firmware erstellt wird, die dazu ausgebildet ist, in die modulare Sicherheitssteuerung (1) übertragen und dort ausgeführt zu werden;
**dadurch gekennzeichnet, dass**
jedem der Funktionsbausteinsymbole (66, 68, 70) ein Datensatz zugeordnet ist, der einen Hardwareressourcenbedarf spezifiziert, wobei die Hardwareressourcen Funktionalitäten der modularen Sicherheitssteuerung (1) und/oder eine Klemmenanzahl umfassen, und
beim Auswählen des Funktionsbausteinsymbols (66, 68, 70) innerhalb der Logikprogrammierung anhand des Hardwareressourcenbedarfs, der in dem diesem Funktionsbaustein (66, 68, 70) zugeordneten Datensatz spezifiziert ist, geprüft wird, ob eine aktuelle Modulkonfiguration der modularen Sicherheitssteuerung (1) diesen Hardwareressourcenbedarf zusätzlich zu einem aktuellen Hardwareressourcenbedarf bereitstellen kann, und
falls die aktuelle Modulkonfiguration diesen Hardwareressourcenbedarf nicht bereitstellen kann, die Modulkonfiguration geändert wird,
wobei beim Ändern der Modulkonfiguration anhand der in den jeweiligen den Funktionsbausteinsymbolen (66, 68, 70) zugeordneten Datensätzen spezifizierten Hardwareressourcenbedarfe aller bereits ausgewählten Instanzen (72 - 84) von Funktionsbausteinsymbolen (66, 68, 70) im zweiten Teilbereich ein Gesamthardwareressourcenbedarf ermittelt wird,
wobei die Modulkonfiguration derart geändert wird, dass die geänderte Modulkonfiguration den Gesamtressourcenbedarf bereitstellen kann, indem aus allen möglichen Kombinationen von Modulen (2, 4, 6) diejenigen Kombinationen ermittelt werden, die den Gesamthardwareressourcenbedarf bereitstellen können.

2. Verfahren nach dem vorhergehenden Anspruch, bei dem die Modulkonfiguration Art und Anzahl der Module (2, 4, 6) der modularen Sicherheitssteuerung (1) umfasst.

3. Verfahren nach Anspruch 2, bei dem auf das Auswählen eines Funktionsbausteinsymbols (66, 68, 70), in dessen zugeordnetem Datensatz eine Klemmenanzahl als Hardwareressourcenbedarf hinterlegt ist, eine aktuelle Belegung der Klemmen (12 - 38) der Module (2, 4, 6) der modularen Sicherheitssteuerung (1) geändert wird.

4. Verfahren nach einem der vorhergehenden Ansprüche, bei dem die geänderte Modulkonfiguration diejenige Modulkonfiguration ist, die die geringstmögliche Menge an Hardwareressourcen bereitstellt, indem von allen möglichen Modulkonfigurationen ein Minimum über benötigte Hardwareressourcen gebildet wird, und die diesem Minimum entsprechende Modulkonfiguration ausgewählt und verwendet wird.

5. Verfahren nach einem der vorhergehenden Ansprüche, bei dem auf Basis von hardwareseitigen Beschränkungen Modulkonfigurationsbedingungen hinterlegt sind,
wobei, falls die geänderte Modulkonfiguration die Modulkonfigurationsbedingungen nicht erfüllt, die Darstellung des Funktionsbausteinsymbols (66, 68, 70) im zweiten Teilbereich (86) der Programmieroberfläche (62) annuliert wird.

6. Verfahren nach einem der vorhergehenden Ansprüche, bei dem auf das Löschen einer Instanz (72 - 84) eines Funktionsbausteinsymbols (66, 68, 70) aus dem zweiten Teilbereich (68) durch den Benutzer der Hardwareressourcenbedarf, der in dem diesem Funktionsbausteinsymbol (66, 68, 70) zugeordneten Datensatz spezifiziert ist, in der aktuellen Modulkonfiguration freigegeben wird.

7. Verfahren nach Anspruch 6, bei dem nach der Freigabe anhand der Hardwareressourcenbedarfe aller bereits ausgewählten Instanzen (72 - 84) von Funktionsbausteinsymbolen (66, 68, 70), wobei die Hardwareressourcenbedarfe in den jeweiligen den Funktionsbausteinsymbolen (66, 68, 70) zugeordneten Datensätzen spezifiziert sind, im zweiten Teilbereich (86) ein Gesamthardwareressourcenbedarf ermittelt wird,
geprüft wird, ob eine andere Modulkonfiguration mit einer geringeren Menge an Hardwareressourcen den Gesamthardwareressourcenbedarf bereitstellen kann, indem von allen möglichen Modulkonfigurationen ein Minimum über benötigte Hardwareressourcen gebildet wird, und
falls auf Basis der Prüfung eine derartige andere Modulkonfiguration ermittelt werden kann, die diesem Minimum entspricht, die aktuelle Modulkonfiguration in die andere Modulkonfiguration geändert wird.

8. Computerprogrammprodukt, welches direkt in den internen Speicher eines digitalen Computers (54) geladen werden kann und Softwarecodeabschnitte umfasst, die, wenn sie auf dem Computer (54) ausgeführt werden, den Computer (54) zum Ausführen des Verfahrens nach einem der vorhergehenden Ansprüche ertüchtigen.

9. Digitaler Computer (54), in dessen internen Speicher das Computerprogrammprodukt nach Anspruch 8 geladen ist.

10. Computerprogrammprodukt, welches direkt in den internen Speicher einer Sicherheitssteuerung (1) geladen werden kann und Konfigurationsdaten oder eine angepasste Firmware umfasst, die mittels des Verfahrens nach einem der Ansprüche 1 bis 7 erstellt wurden.

11. Sicherheitssteuerung (1), ausgelegt zum gemäß einer Sicherheitsvorschrift sicheren Ein- und Ausschalten eines elektrischen Verbrauchers, programmiert mit dem Verfahren nach einem der Ansprüche 1 bis 7.

## Claims

1. A method for programming a modular safety controller (1), designed to switch an electrical load on and off safely according to a safety regulation, wherein, by means of a processor,
a programming interface (62) with logic programming is displayed on a screen (60),
a plurality of function block symbols (66, 68, 70) symbolizing input signals from encoders or output signals to actuators, or comprising logic function blocks, are displayed in a first subarea (64) of the programming interface (62);
upon selection of one of the function block symbols (66, 68, 70) by a user within the logic programming, an instance (72 - 84) of the selected function block symbol (66, 68, 70) is displayed in a second subarea (86) of the programming interface (62),
wherein the second subarea (86) is designed in such a way that already selected instances (72 - 84) of function block symbols (66, 68, 70) are logically linked by the user on the basis of a logic circuit diagram (86),
and either configuration data is created by the processor on the basis of the created logic circuit diagram (68) and a module configuration and terminal assignment, which configuration data is designed to be loaded into the modular safety controller (1) and interpreted and used by the latter during the execution of firmware stored therein, or adapted firmware is created which is designed to be transferred to the modular safety controller (1) and executed therein; **characterized in that**
each of the function block symbols (66, 68, 70) is associated with a data set specifying a hardware resource requirement, the hardware resources comprising functionalities of the modular safety controller (1) and/or a terminal count, and when the function block symbol (66, 68, 70) is selected within the logic programming, it is checked on the basis of the hardware resource requirement specified in the data set assigned to this function block (66, 68, 70) whether a current module configuration of the modular safety controller (1) can provide this hardware resource requirement in addition to a current hardware resource requirement, and
if the current module configuration cannot provide this hardware resource requirement, the module configuration is changed,
wherein, when the module configuration is changed, a total hardware resource requirement of all already selected instances (72 - 84) of function module symbols (66, 68, 70) in the second subarea is determined on the basis of the data records specified in the respective data records assigned to the function module symbols (66, 68, 70),
wherein the module configuration is changed such that the changed module configuration can provide the total resource requirement by determining from all possible combinations of modules (2, 4, 6) those combinations that can provide the total hardware resource requirement.

2. The method according to the preceding claim, wherein the module configuration comprises type and number of modules (2, 4, 6) of the modular safety controller (1).

3. The method according to claim 2, in which, upon selecting a function block symbol (66, 68, 70) in whose associated data set a terminal number is stored as a hardware resource requirement, a current assignment of the terminals (12 - 38) of the modules (2, 4, 6) of the modular safety controller (1) is changed.

4. The method according to any one of the preceding claims, in which the changed module configuration is the module configuration that provides the least possible amount of hardware resources by forming a minimum on required hardware resources from all possible module configurations, and selecting and using the module configuration corresponding to this minimum.

5. The method according to any one of the preceding claims, in which module configuration conditions are stored based on hardware-side constraints,
wherein, if the modified module configuration does not satisfy the module configuration conditions, the representation of the function block symbol (66, 68, 70) in the second subarea (86) of the programming interface (62) is annulled.

6. The method according to any one of the preceding claims, wherein upon deletion by the user of an instance (72 - 84) of a function block symbol (66, 68, 70) from the second subarea (68), the hardware resource requirement specified in the data set associated with that function block symbol (66, 68, 70) is released in the current module configuration.

7. The method according to claim 6, in which, after the release, a total hardware resource requirement is determined in the second subarea (86) on the basis of the hardware resource requirements of all instances (72 - 84) of function block symbols (66, 68, 70) which have already been selected, the hardware resource requirements being specified in the respective data records associated with the function block symbols (66, 68, 70),
checking whether another module configuration with a smaller amount of hardware resources can provide the total hardware resource requirement by forming a minimum over required hardware resources from all possible module configurations, and
if on the basis of the check such other module configuration can be determined which corresponds to this minimum, the current module configuration is changed to the other module configuration.

8. A computer program product that can be loaded directly into the internal memory of a digital computer (54) and comprises software code portions that, when executed on the computer (54), enable the computer (54) to perform the method of any one of the preceding claims.

9. A digital computer (54) having loaded into its internal memory the computer program product of claim 8.

10. A computer program product which can be loaded directly into the internal memory of a security controller (1) and comprises configuration data or a customized firmware created by means of the method according to any one of claims 1 to 7.

11. Safety controller (1) designed for switching an electrical load on and off safely according to a safety regulation, programmed with the method according to any of claims 1 to 7.

## Revendications

1. Procédé de programmation d'une commande de sécurité modulaire (1), conçue pour la mise en marche et l'arrêt sûrs d'un consommateur électrique conformément à une prescription de sécurité, dans lequel, par un processeur une interface de programmation (62) comprenant une programmation logique est affichée sur un écran (60),
dans une première zone partielle (64) de l'interface de programmation (62) est représentée une pluralité de symboles de blocs fonctionnels (66, 68, 70) qui symbolisent des signaux d'entrée de codeurs ou des signaux de sortie sur des actionneurs, ou comprennent des blocs fonctionnels logiques ;
en réponse à la sélection de l'un des symboles de bloc fonctionnel (66, 68, 70) par un utilisateur à l'intérieur de la programmation logique, une instance (72 - 84) du symbole de bloc fonctionnel sélectionné (66, 68, 70) est représentée dans une deuxième zone partielle (86) de l'interface de programmation (62),
la deuxième zone partielle (86) étant conçue de telle sorte que des instances (72 - 84) déjà sélectionnées de symboles de blocs fonctionnels (66, 68, 70) sont combinées logiquement par l'utilisateur à l'aide d'un schéma logique (86),
et, par le processeur, sur la base du schéma de circuit logique (68) établi et d'une configuration de module et d'une affectation de bornes, soit on établit des données de configuration qui sont conçues pour être chargées dans la commande de sécurité modulaire (1) et pour être interprétées et utilisées par celle-ci pendant l'exécution d'un micrologiciel qui y est déposé, soit on établit un micrologiciel adapté qui est conçu pour être transmis dans la commande de sécurité modulaire (1) et pour y être exécuté ;
**caractérisé en ce que**
à chacun des symboles de blocs fonctionnels (66, 68, 70) est associé un jeu de données qui spécifie un besoin en ressources matérielles, les ressources matérielles comprenant des fonctionnalités de la commande de sécurité modulaire (1) et/ou un nombre de bornes, et
lors de la sélection du symbole de bloc fonctionnel (66, 68, 70) à l'intérieur de la programmation logique, à l'aide du besoin en ressources matérielles qui est spécifié dans le jeu de données associé à ce bloc fonctionnel (66, 68, 70), on vérifie si une configuration de module actuelle de la commande de sécurité modulaire (1) peut fournir ce besoin en ressources matérielles en plus d'un besoin actuel en ressources matérielles, et
si la configuration actuelle du module ne peut pas fournir ces ressources matérielles, la configuration du module est modifiée,
dans lequel, lors de la modification de la configuration du module, un besoin total en ressources matérielles est déterminé dans la deuxième zone partielle à l'aide des besoins en ressources matérielles spécifiés dans les jeux de données respectifs associés aux symboles de blocs fonctionnels (66, 68, 70) de toutes les instances (72 à 84) déjà sélectionnées de symboles de blocs fonctionnels (66, 68, 70),
la configuration de module étant modifiée de telle sorte que la configuration de module modifiée puisse fournir le besoin total en ressources, en déterminant parmi toutes les combinaisons possibles de modules (2, 4, 6) les combinaisons qui peuvent fournir le besoin total en ressources matérielles.

2. Procédé selon la revendication précédente, dans lequel la configuration de modules comprend le type et le nombre de modules (2, 4, 6) de la commande modulaire de sécurité (1).

3. Procédé selon la revendication 2, dans lequel une occupation actuelle des bornes (12 - 38) des modules (2, 4, 6) de la commande de sécurité modulaire (1) est modifiée sur la sélection d'un symbole de bloc fonctionnel (66, 68, 70) dans le jeu de données associé duquel un nombre de bornes est enregistré en tant que besoin de ressources matérielles.

4. Procédé selon l'une des revendications précédentes, dans lequel la configuration de module modifiée est la configuration de module qui met à disposition la plus petite quantité possible de ressources matérielles, en formant, parmi toutes les configurations de module possibles, un minimum sur les ressources matérielles nécessaires, et en sélectionnant et en utilisant la configuration de module correspondant à ce minimum .

5. Procédé selon l'une quelconque des revendications précédentes, dans lequel des conditions de configuration de module sont enregistrées sur la base de contraintes matérielles,
dans lequel, si la configuration de module modifiée ne remplit pas les conditions de configuration de module, la représentation du symbole de module fonctionnel (66, 68, 70) dans la deuxième zone partielle (86) de l'interface de programmation (62) est annulée.

6. Procédé selon l'une quelconque des revendications précédentes, dans lequel, à la suite de la suppression par l'utilisateur d'une instance (72-84) d'un symbole de bloc fonctionnel (66, 68, 70) de la deuxième sous-zone (68), les besoins en ressources matérielles spécifiés dans l'ensemble de données associé à ce symbole de bloc fonctionnel (66, 68, 70) sont libérés dans la configuration actuelle du module.

7. Procédé selon la revendication 6, dans lequel, après la libération, à l'aide des besoins en ressources matérielles de toutes les instances (72 - 84) déjà sélectionnées de symboles de blocs fonctionnels (66, 68, 70), les besoins en ressources matérielles étant spécifiés dans les enregistrements de données respectifs associés aux symboles de blocs fonctionnels (66, 68, 70), un besoin total en ressources matérielles est déterminé dans la deuxième zone partielle (86),
on vérifie si une autre configuration de module avec une quantité moindre de ressources matérielles peut fournir les besoins totaux en ressources matérielles en établissant un minimum de toutes les configurations de module possibles sur les ressources matérielles nécessaires, et
si, sur la base de l'examen, une telle autre configuration de module correspondant à ce minimum peut être déterminée, la configuration de module actuelle est modifiée en l'autre configuration de module.

8. Produit de programme d'ordinateur qui peut être chargé directement dans la mémoire interne d'un ordinateur numérique (54) et qui comprend des sections de code logiciel qui, lorsqu'elles sont exécutées sur l'ordinateur (54), permettent à l'ordinateur (54) d'exécuter le procédé selon l'une quelconque des revendications précédentes.

9. Ordinateur numérique (54) dans la mémoire interne duquel est chargé le produit programme d'ordinateur selon la revendication 8.

10. Produit de programme d'ordinateur qui peut être chargé directement dans la mémoire interne d'un contrôleur de sécurité (1) et qui comprend des données de configuration ou un micrologiciel adapté qui ont été créés au moyen du procédé selon l'une quelconque des revendications 1 à 7.

11. Commande de sécurité (1) conçue pour la mise en marche et l'arrêt sûrs d'un consommateur électrique conformément à une règle de sécurité, programmée avec le procédé selon l'une des revendications 1 à 7.
